## Europäisches Patentamt
## European Patent Office
## Office européen des brevets

(19)

(11) Publication number: **0 017 436**
**B1**

(12) **EUROPEAN PATENT SPECIFICATION**

(45) Date of publication of patent specification: **13.06.84**

(51) Int. Cl.³: **H 01 M 2/02, H 01 M 6/12**

(21) Application number: **80300963.8**

(22) Date of filing: **28.03.80**

(54) Hermetically sealed electrochemical cell and method of making same.

(30) Priority: **29.03.79 US 25095**

(43) Date of publication of application:
**15.10.80 Bulletin 80/21**

(45) Publication of the grant of the patent:
**13.06.84 Bulletin 84/24**

(84) Designated Contracting States:
**CH DE FR GB**

(56) References cited:
**FR - A - 924 795**
**FR - A - 2 380 643**
**GB - A - 2 005 063**
**GB - A - 2 014 354**
**GB - A - 2 020 888**
**US - A - 1 333 771**
**US - A - 3 380 857**
**US - A - 3 840 408**
**US - A - 3 928 077**
**US - A - 4 053 692**

(73) Proprietor: **UNION CARBIDE CORPORATION**
**Old Ridgebury Road**
**Danbury Connecticut 06817 (US)**

(72) Inventor: **Peterson, Gordon Edward**
**14317 Birchwood Avenue**
**Cleveland Ohio (US)**

(74) Representative: **Ranson, Arthur Terence et al,**
**W.P. Thompson & Co. Coopers Building Church**
**Street**
**Liverpool L1 3AB (GB)**

Courier Press, Leamington Spa, England.

# Description

The present invention relates to hermetically sealed electrochemical cell and method of manufacturing same.

Many designs of hermetically sealed electrochemical cells have an insulated terminal protruding from one surface of the cell. The height of such a protruding terminal represents a lost useable volume of the overall external volume of the cell. Some designs employ a flanged seam protruding around the periphery of the cell where two housing parts have been welded together. Such a protruding seam also represents a lost useable volume of the overall external volume of the cell. There is a need for greater volumetric efficiency so that a greater proportion of the overall external volume of a cell can be utilised for the electrochemical cell itself.

One form of casing for an electrochemical cell as disclosed in United States Patent Specification No. 3,928,077 comprises a metal cup-shaped housing part within which is fitted an inverted cup-shaped lid of a plastics material. The wall of the lid engages the bottom of the metal housing part to define a space therebetween for the active portion of the cell. The metal housing part serves as one electrode terminal and a metal member such as a rivet which passes through the bottom of the plastics lid serves as the second electrode terminal. The cell is sealed by crimping the rim of the wall of the metal cup-shaped housing part onto the bottom of the plastics lid. Whilst this construction overcomes the loss of useable volume created by a protruding second electrode terminal, the lid being of plastics material has a bottom and wall thickness many times greater than the thickness of the metal housing part so that the volumetric efficiency is low since the volume occupied by the bottom and wall of the plastics lid represents a lost volume which is a significant proportion of the overall external volume of the cell.

According to one feature of the present invention a button-type hermetically sealed electrochemical cell employing an anode, a cathode, a separator therebetween, and electrolyte assembled within a housing comprising a cup-shaped first container member having a closed base portion and an upstanding wall portion, and a cup-shaped second container member having a closed base portion and an upstanding wall portion, said container members being inserted and opposedly contained one in the other such that a cylindrically shaped space is formed therebetween, the wall portion of one of the container members fitting adjacently and concentrically within the wall portion of the other container member to form an inner wall and an outer wall, said housing serving as one electrode terminal of the cell and having a second electrode terminal of the cell located in the base portion of the second container member, is characterized in that the container members are made from metal sheet, the peripheral edge of the outer wall portion is hermetically sealed to the inner wall portion, that the second electrode terminal is insulated from the base portion of the second container member by an annular insulator, and that said second electrode terminal is in the form of a portion of an electrolyte fill tube communicating with the cylindrically shaped space and which has been hermetically sealed to form the terminal after the electrolyte has been introduced through it into said space, said second electrode terminal and insulator being recessed in the base portion of the second container member so that no portion of the second electrode terminal and insulator extend beyond the outer surface of the base portion of the second container member.

According to another feature of the present invention a method of manufacturing a button-type hermetically sealed electrochemical cell comprises the steps of providing a cup-shaped first container member having a closed base portion and an upstanding wall portion, providing a cup-shaped second container member having a closed base portion and an upstanding wall portion, said base portion of said second container member having an electrolyte fill tube located therein and insulated therefrom by an annular insulator, said insulator being recessed in said base portion of said second container portion so that no portion of said insulator extends beyond the outer surface of said base portion of said second container member, placing a first electrode in said second container member in contact with said container member, placing a first separator in contact with said first electrode, placing a second electrode of opposite polarity to said first electrode in contact with said first separator, said second electrode being separated from said first electrode by said first separator, placing a second separator in contact with said second electrode, placing a third electrode of the same polarity as the first electrode in contact with said second separator, said third electrode being separated from the second electrode by said second separator, fitting the wall of said second container member adjacently and concentrically within the wall of said first container member so that said base portion of said first container member is in contact with said second electrode, hermetically sealing the peripheral edge of said first container member to said wall of said second container member, evacuating the cell interior, filling the cell with an electrolyte through said fill tube, pinching said fill tube closed, welding said fill tube at the pinched area, and removing the excess length of said fill tube beyond the weld, said first and second container members comprising the cell housing which serves as a first electrode terminal, the welded fill tube serving as a second electrode terminal, said second electrode terminal being recessed in said base portion of said second container member so that no portion of said second electrode terminal extends beyond the outer surface of said base portion of said second container member.

The invention will be further described by way of example with reference to the accompanying drawings in which:

Fig. 1A is a side sectional view of a conventional button cell with a terminal insulator of glass,

Fig. 1B is a side sectional view of a conventional button cell with a terminal and its glass insulator recessed within the cell housing,

Fig. 1C is a side sectional view of a button cell according to one embodiment of the invention having a terminal and its glass terminal insulator recessed within a cell housing and having a hermetically sealed can-within-a-can construction,

Fig. 1D is a partial top view of the cell of Fig. 1A,

Fig. 2A is a side sectional view of a conventional button cell with a ceramic terminal insulator,

Fig. 2B is a side sectional view of a conventional button cell with a terminal and its ceramic terminal insulator recessed within the cell housing,

Fig. 2C is a side sectional view of a button cell according to another embodiment of the invention having a terminal and its ceramic terminal insulator recessed within the cell housing and having a hermetically sealed can-within-a-can construction,

Fig. 2D is a partial top view of the cell of Fig. 2A, and

Fig. 3 illustrates a miniature button cell construction embodying the present invention and manufactured in accordance with the Example hereinafter described.

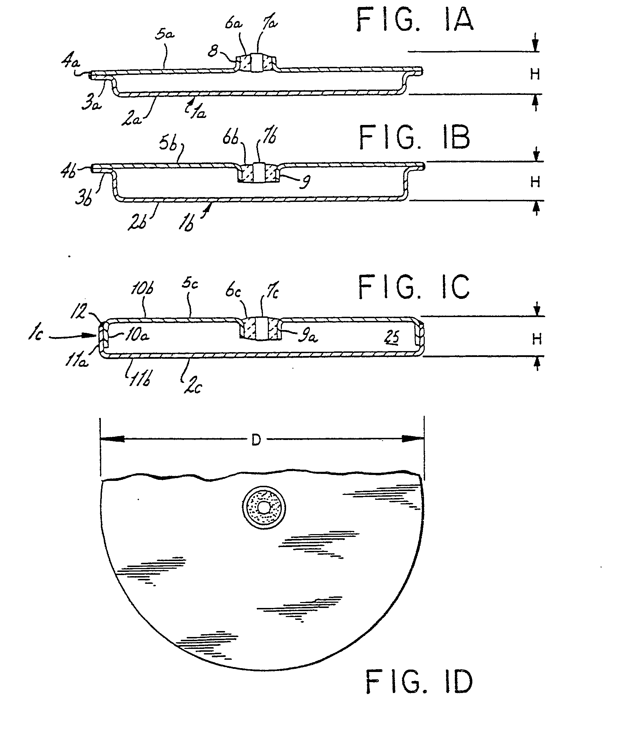

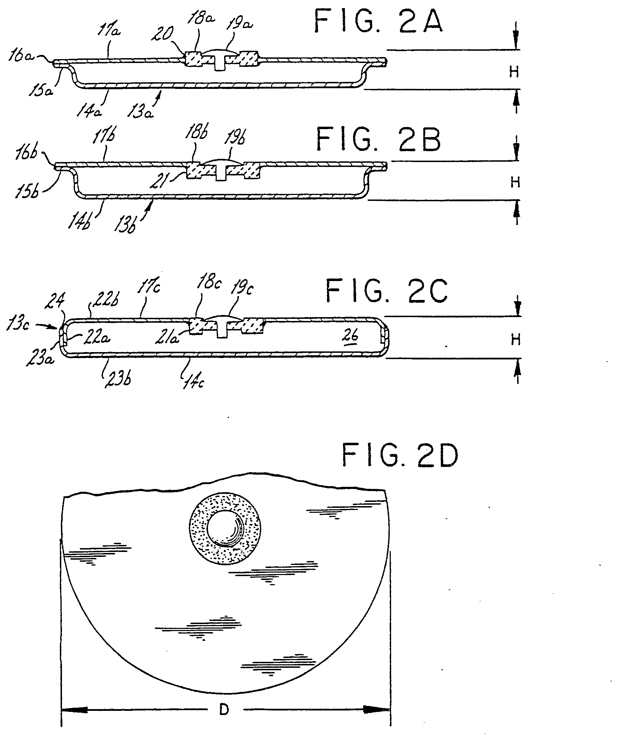

Presently marketed designs for hermetically sealed cells (1a, 13a) employing glass or ceramic terminal insulators 6a, 18a, e.g., nonaqueous cells, have the glass (Fig. 1A) or ceramic (Fig. 2A) terminal insulator 6a, 18a protruding from one surface of the cell, generally the cover 5a, 17a, and a flanged seam 3a, 15a around the outer periphery of the cell where the two halves of the container have been welded together 4a, 16a. Typical overall button cell dimensions are 25-mm diameter D by 2.5-mm height H. Any dimensions set forth herein are only illustrative and not intended to be limitative of the invention. Because of volume lost due to the height of the terminal 7a, 19a and its insulator 6a, 18a beyond the cell cover 5a, 17a the flanged seam 3a, 15a around the outer edge, and the thickness of the container walls, the useable interior volume of a typical cell 1a employing a glass terminal insulator 6a is about 0.41 cm$^3$ out of an overall external volume of 1.22 cm$^3$. A construction using a ceramic terminal insulator 18a is somewhat more efficient volumetrically, having a useable volume of about 0.58 cm$^3$, out of a similar overall external volume, but additional improvements are needed.

To make more efficient use of the overall cell volume, it is necessary to reduce the lost volume due to the protruding terminal and insulator, whether glass or ceramic, and also that due to the welded flanged seam 3a, 15a.

To reduce the volume lost due to the protruding terminal 7a, 19a and insulator 6a, 18a it is necessary to reverse the cell cover 5a, 17a or the section of the cell container in which the terminal insulator may be situated so that the insulator is recessed within the cover instead of projecting outwardly from the cover. In this way, the cell container 2b, 14b can be made deeper (higher) and the volume lost by having the terminal and insulator within the cell, i.e., recessed within the cover, is small compared to the internal volume gained from the increased cell interior height. With the glass terminal insulator shown in Fig. 1B, the available interior volume is now about 0.77 cm$^3$ out of the overall external volume of 1.22 cm$^3$. With the ceramic terminal insulator (Fig. 2B), the available interior volume is also increased to about 0.77 cm$^3$ out of the overall volume of 1.22 cm$^3$.

To reduce the lost useable interior volume due to the welded flanged seam 3a, 15a it has been found desirable according to the present invention to utilize a can-within-a-can construction, where one can is inverted within the other in a telescoping arrangement, where the diameter of the inner can is slightly smaller than the diameter of the outer can, as for example as shown in Fig. 1C and 2C. With this construction and a glass or ceramic terminal insulator, the useable interior volume in each cell housing 1c, 13c is now about 0.89 cm$^3$ out of the overall external volume of 1.22 cm$^3$.

Referring alternatively to Figs. 1C and 2C which illustrate respectively the glass insulated 1c and ceramic insulated 13c embodiments of this invention, the button-type hermetically sealed electrochemical cell housing of this invention comprises a cup-shaped first container member 2c, 14c made from metal sheet and having a closed base portion 11b, 23b and an upstanding wall portion 11a, 23a and a second cup-shaped container member 5c, 17c made from metal sheet and having a closed base portion 10b, 22b and an upstanding wall portion 10a, 22a invertedly and opposedly contained one in the other such that a cylindrically shaped space 25, 26 is formed therebetween, the wall 10a or 11a, 22a or 23a of either the second container member 5c, 17c or the first container member 2c, 14c fitting adjacently and concentrically within the wall of the other member. Figures 1C and 2C specifically illustrate the wall 10a, 22a of the second container member 5c, 17c fitting adjacently and concentrically within the wall 11a, 23a of the first container member 2c, 14c. The peripheral edge 12, 24 of the outermost wall is hermetically sealed to the inner wall by suitable means such as welding, e.g. laser welding. The housing 1c, 13c serves as one electrode terminal of the cell, while a second electrode terminal 7c, 19c is secured preferably centrally in the base portion 10b, 22b of the second container member 5c, 17c. The second electrode terminal is insulated from the second container member 5c, 17c by an annular glass 6c or ceramic 18c insulator. The second electrode terminal 7c, 19c and insulator 6c, 18c are recessed 9a, 21a in the second container member 5c, 17c so that no portion of the electrode terminal 7c, 19c or insulator 6c, 18c extends beyond the outer surface of the second container member 5c, 17c.

For ease of adaptability to high-speed manufacturing techniques, it is important that the upstanding wall portions of the cell housing, i.e., walls of the outer and inner containers be firmly held in close proximity prior to the final sealing operation. This can be done by providing a good force-fit between the two parts or by clamping the two containers together. However, the former would require very close control of the diameter of the two containers, and the latter would be cumbersome and time-consuming to do on an automated production line. Alternatives are the use of a suitable adhesive to pre-seal the walls of the two containers together or the use of conventional crimping technique to force the peripheral edge of the outer container wall inwardly against the wall of the inner container. If a permanent bond is obtained with an adhesive, a final welding step may be omitted.

These construction concepts are equally applicable to various electrochemical systems and cell sizes where maximum internal volume would not be critical as in a small button cell, but where ease and speed of assembly would still be a major consideration.

The following example is set forth as being merely illustrative of the invention and is not intended, in any manner, to be limitative thereof.

Any relative dimensions shown in the figures and example are not critical to the invention. Larger or smaller diameters and shallower or deeper cells also show significant improved volumetric efficiency.

### Example

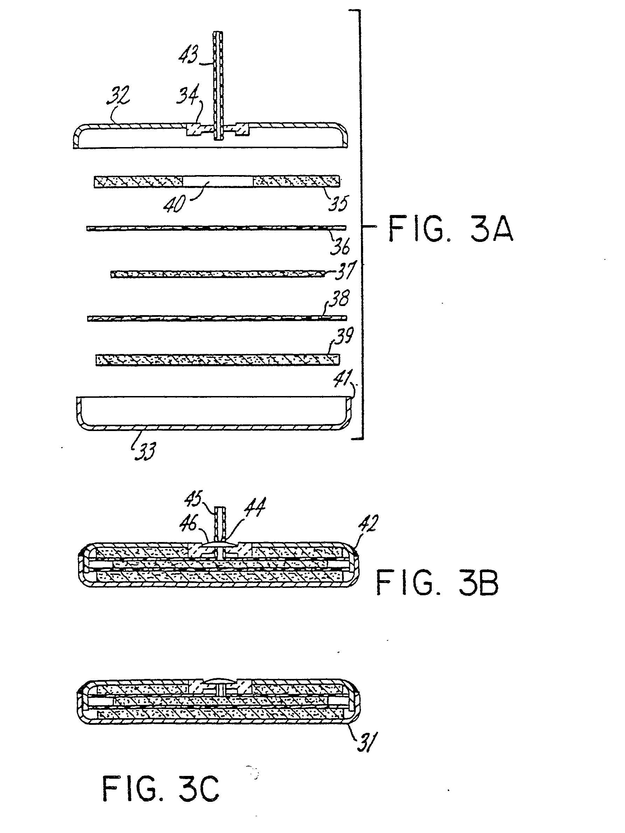

A miniature button cell 31 with a housing (2.25 cm in diameter and 0.225 cm in height) was constructed as shown in Fig. 3. Both the inner container 32 and the outer container 33 were of stainless steel, 0.025 cm thick. Twin cathodes 35, 39 were made by rolling a dry mixture of $FeS_2$ powder and a suitable binder into a carrier of expanded nickel screen using a pair of heated rollers. Circular discs, one with a centre hole 40, were then punched from the strip. Anode 37 was made by pressing a strip of lithium into an expanded metal screen carrier and then punching out a disc. Twin separators 36, 38 were punched from a non-woven felted polypropylene mat. In assembling the cell, the inner container 32 was first fitted with a recessed ceramic insulator 34. The inner container 32 containing the insulator 34 and a metal fill tube 43 projecting therethrough was then inverted and the electrodes 35, 37, 39 and separator layers 36, 38 inserted in the inner container 32 in the order shown in Fig. 3A. Since the twin cathodes 35, 39 are in electrical and physical contact with the two sections of the metal cell housing, the inner and outer metal containers 32, 33, the housing thus serves as the external cathode contact.

External anode contact, i.e., the anode terminal, is provided by the metal fill tube 43 protruding through the ceramic insulator 34, which tube 43 is forced down through the separator 36 into the anode 37 when the cell housing 31 is assembled and closed as shown in Fig. 3B. In closing the cell, the outer container 33 was fitted over the inverted inner container 32 and the peripheral edge 41 of the wall of the outer container 33 was crimped inwardly, to ensure a tight fit with the mating portions of the inner container 32. The cell construction was then laser-welded around the peripheral junction 42 of the two containers at the crimped area. A commercial $CO_2$ continuous beam laser, rated at 1200 watts and supplying 10.6 micrometer wavelength radiation, was employed at a power level of 700 to 800 watts. An electrolyte was put in by first evacuating the cell interior and then filling through the metal fill tube 43 with an electrolyte of lithium trifluoro-methanesulfonate $(LiCF_3SO_3)$ dissolved in 30 vol. % 3-methyl-2-oxazolidone (3Me2Ox)—30 vol. % dimethoxyethane (DME)—40 vol. % dioxolane. The fill tube was then pinched closed and subsequently welded at the pinched area 44. The excess length of tube 45 beyond the weld 46 was allowed to remain for test purposes and then removed, resulting in the cell 31.

### Claims

1. A button-type hermetically sealed electrochemical cell employing an anode, a cathode, a separator therebetween, and electrolyte assembled within a housing comprising a cup-shaped first container member having a closed base portion and an upstanding wall portion, and a cup-shaped second container member having a closed base portion and an upstanding wall portion, said container members being inverted and opposedly contained one in the other such that a cylindrically shaped space is formed therebetween, the wall portion of one of the container members fitting adjacently and concentrically within the wall portion of the outer container member to form an inner wall and an outer wall, said housing serving as one electrode terminal of the cell and having a second electrode terminal of the cell located in the base portion of the second container member, characterized in that the container members are made from metal sheet, the peripheral edge of the outer wall portion is hermetically sealed to the inner wall portion, that the second electrode terminal is insulated from the base portion of the second container member (5c, 17c) by an annular insulator (6c, 18c), and that said second electrode terminal is in the form of a portion of an electrolyte fill tube communicating with the cylindrically shaped space and which has been hermetically sealed to form the terminal after the electrolyte has been introduced through it into said space, said second electrode terminal and insulator being recessed (9a, 21a) in the base portion of the second container member so that no portion of the second electrode terminal and insulator extend beyond the outer surface of the base portion of the second container member.

2. A cell as claimed in claim 1, in which the wall (10a, 22a) of the second container member (5c, 17c) is fitted adjacently and concentrically within the wall (11a, 23a) of the first container member (2c, 14c).

3. A cell as claimed in claim 1, in which the wall (11a, 23a) of the first container member (2c, 14c) is fitted adjacently and concentrically within the wall (10a, 22a) of the second container member (5c, 17c).

4. A cell as claimed in claim 2 or 3, in which the peripheral edge of the outermost wall (10a, 11a) is hermetically sealed to the inner wall by a weld (12).

5. A cell as claimed in claim 2 or 3, in which the peripheral edge of the outermost wall (10a, 11a) is hermetically sealed to the inner wall by a laser weld (12).

6. A cell as claimed in any of claims 1 to 5, in which the annular insulator is a glass insulator (6c) or a ceramic insulator (18c).

7. A cell as claimed in claim 4 or 5, in which the peripheral edge of the outermost wall is crimped toward the inner wall.

8. A method of manufacturing a button-type hermetically sealed electrochemical cell comprising the steps of:

(a) providing a cup-shaped · first container member (33) having a closed base portion and an upstanding wall portion;

(b) providing a cup-shaped second container member (32) having a closed base portion and an upstanding wall portion, said base portion of said second container member having an electrolyte fill tube (43) located therein and insulated therefrom by an annular insulator (34), said insulator being recessed in said base portion of said second container member so that no portion of said insulator extends beyond the outer surface of said base portion of said second container member;

(c) placing a first electrode (35) in said second container member (32) in contact with said second container member;

(d) placing a first separator (36) in contact with said first electrode;

(e) placing a second electrode (37) of opposite polarity to said first electrode in contact with said first separator, said second electrode being separated from said first electrode by said first separator;

(f) placing a second separator (38) in contact with said second electrode (37);

(g) placing a third electrode (39) of the same polarity as said first electrode in contact with said second separator (38), said third electrode being separated from said second electrode by said second separator;

(h) fitting the wall of said second container member (32) adjacently and concentrically within the wall of said first container member (33), so that said base portion of said first container (33) member is in contact with said third electrode (39), and said fill tube (43) is in contact with said second electrode (37);

(i) hermetically sealing the peripheral edge (41) of said first container member (32) to said wall of said second container member (33);

(j) evacuating the cell interior;

(k) filling the cell with an electrolyte through said fill tube;

(l) pinching (44) said fill tube closed;

(m) welding (46) said fill tube at the pinched area; and

(n) removing the excess length (45) of said fill tube beyond the weld (46), said first and second container members comprising the cell housing which serves as a first electrode terminal, the welded fill tube serving as a second electrode terminal, said second electrode terminal being recessed in said base portion of said second container member so that no portion of said second electrode terminal extends beyond the outer surface of said base portion of said second container member.

**Revendications**

1. Pile électrochimique du type bouton, scellée hermétiquement, utilisant une anode, une cathode, un séparateur placé entre elles, et un électrolyte, assemblés dans un boîtier comprenant un premier élément de récipient en forme de coupelle ayant une partie de base fermée et une partie de paroi orientée vers le haut, et un second élément de récipient en forme de coupelle ayant une partie de base fermée et une partie de paroi orientée vers le haut, lesdits éléments de récipient étant inversés et logés en opposition l'un dans l'autre de manière qu'un espace de forme cylindrique soit défini entre eux, la partie de paroi de l'un des éléments de récipient s'ajustant étroitement et concentriquement dans la partie de paroi de l'autre élément de récipient pour former une paroi intérieure et une paroi extérieure, ledit boîtier servant de première borne d'électrode de la pile et ayant une seconde borne d'électrode de la pile située dans la partie de base du second élément de récipient, caractérisée en ce que les éléments de récipient sont réalisés en tôle métallique, le bord périphérique de la partie de paroi extérieure est scellé hermétiquement à la partie de paroi intérieure, en ce que la seconde borne d'électrode est isolée de la partie de base du second élément de récipient (5c, 17c) par un isolateur annulaire (6c, 18c), et en ce que la seconde borne d'électrode se présente sous la forme d'une partie d'un tube de remplissage d'électrolyte communiquant avec l'espace de forme cylindrique et qui a été scellé hermétiquement pour former la borne après que l'électrolyte a été introduit par ce tube dans ledit espace, ladite seconde borne d'électrode et ledit isolateur étant en retrait (9a, 21a) dans la partie de base du second élément de récipient afin qu'aucune partie de la seconde borne d'électrode et de l'isolateur ne dépasse de la surface extérieure de la partie de base du second élément de récipient.

2. Pile selon la revendication 1, dans laquelle la paroi (10a, 22a) du second élément de récipient (5c, 17c) est ajustée étroitement et concentriquement à l'intérieur de la paroi (11a, 23a) du premier élément de récipient (2c, 14c).

3. Pile selon la revendication 1, dans laquelle la paroi (11a, 23a) du premier élément de récipient (2c, 14c) est ajustée étroitement et concentriquement à l'intérieur de la paroi (10a, 22a) du second élément de récipient (5c, 17c).

4. Pile selon la revendication 2 ou 3, dans laquelle le bord périphérique de la paroi extérieure (10a, 11a) est scellé hermétiquement sur la paroi intérieure par une soudure (12).

5. Pile selon la revendication 2 ou 3, dans laquelle le bord périphérique de la paroi extérieure (10a, 11a) est scellé hermétiquement sur la paroi intérieure par une soudure (12) à laser.

6. Pile selon l'une quelconque des revendications 1 à 5, dans laquelle l'isolateur annulaire est un isolateur en verre (6c) ou un isolateur céramique (18c).

7. Pile selon la revendication 4 ou 5, dans laquelle le bord périphérique de la paroi extérieure est serti vers la paroi intérieure.

8. Procédé de fabrication d'une pile électrochimique du type bouton, scellée hermétiquement, comprenant les étapes qui consistent:

(a) à utiliser un premier élément (33) de récipient en forme de coupelle ayant une partie de base fermée et une partie de paroi orientée vers le haut;

(b) à utiliser un second élément de récipient (32) en forme de coupelle ayant une partie de base fermée et une partie de paroi orientée vers le haut, ladite partie de base du second élément de récipient comportant un tube (43) de remplissage d'électrolyte qui est disposé à l'intérieur de cette partie et qui en est isolé par un isolateur annulaire (34), ledit isolateur étant en retrait dans ladite partie de base dudit second élément de récipient afin qu'aucune partie dudit isolateur ne dépasse de la surface extérieure de ladite partie de base du second élément de récipient;

(c) à placer une première électrode (35) dans ledit second élément (32) de récipient, en contact avec ledit second élément de récipient;

(d) à placer un premier séparateur (36) en contact avec ladite première électrode;

(e) à placer une seconde électrode (37) de polarité opposée à celle de ladite première électrode en contact avec ledit premier séparateur, ladite seconde électrode étant séparée de ladite première électrode par ledit premier séparateur;

(f) à placer un second séparateur (38) en contact avec ladite seconde électrode (37);

(g) à placer une troisième électrode (39) de la même polarité que ladite première électrode en contact avec ledit second séparateur (38), ladite troisième électrode étant séparée de ladite seconde électrode par ledit second séparateur;

(h) à adjuster la paroi dudit second élément (32) de récipient étroitement et concentriquement à l'intérieur de la paroi dudit premier élément (33) de récipient, de manière que ladite partie de base dudit premier élément (33) de récipient soit en contact avec ladite troisième électrode (39), et que ledit tube (43) de remplissage soit en contact avec ladite seconde électrode (37);

(i) à sceller hermétiquement le bord périphérique (41) dudit premier élément (32) de récipient sur ladite paroi dudit second élément (33) de récipient;

(j) à évacuer l'intérieur de la pile;

(k) à remplir la pile d'un électrolyte à l'aide dudit tube de remplissage;

(l) à fermer ledit tube de remplissage en le pinçant (44);

(m) à souder (46) la zone pincée dudit tube de remplissage; et

(n) à éliminer l'excédent de longueur (45) dudit tube de remplissage au-delà de la soudure (46), lesdits premier et second éléments de récipient constituant le boîtier de la pile qui sert de première borne d'électrode, le tube de remplissage soudé servant de seconde borne d'électrode, ladite seconde borne d'électrode étant en retrait dans ladite partie de base dudit second élément de récipient, afin qu'aucune partie de ladite seconde borne d'électrode ne dépasse de la surface extérieure de ladite partie de base dudit second élément de récipient.

**Patentansprüche**

1. Eine hermetisch verschlossene elektrochemische Zelle vom Knopftyp, enthaltend eine Anode, eine Kathode, einen dazwischen angeordneten Separator und einen Elektrolyten, angeordnet in einem Gehäuse, das ein tassenförmiges erstes Behälterteil mit einem geschlossenen Bodenteil und aufrechten Wandteilen, ein tassenförmiges zweites Behälterteil mit einem geschlossenen Bodenteil und aufrechten Wandteilen enthält, wobei die genannten Behälterteile nach innen gewandt sind und gegenüberliegend eins vom anderen derart umfaßt werden, daß dazwischen ein zylindrisch geformter Raum gebildet wird, wobei der Wandteil eines der Behälterteile anliegend und konzentrisch in das Wandteil des anderen Behälterteils paßt und eine innere Wand und eine äußere Wand bildet, und das Gehäuse als ein Elektrodenendstück der Zelle dient und ein zweites Elektrodenstück der Zelle im Bodenteil des zweiten Behälterteils gelegen ist, dadurch gekennzeichnet, daß die Behälterteile aus Metallfolien hergestellt sind, die äußere Umfangskante des äußeren Wandteils hermetisch am inneren Wandteil verschlossen ist, daß der zweite Elektrodenendteil vom Bodenteil des zweiten Behälterteils (5c, 17c) durch einen ringförmigen Isolator (7c, 18c) isoliert ist und daß das besagte zweite Elektrodenendteil die Form eines Teils eines Elektrolytfüllrohres aufweist, das mit dem zylindrisch geformten Raum in Verbindung steht und das hermetisch verschlossen ist, um das Endteil zu bilden, nachdem der Elektrolyt durch dieses in den Raum eingeführt worden ist, wobei das besagte zweite Elektrodenendteil und der Isolator in das Bodenteil des zweiten Behälterteils eingesenkt sind (9a, 21a), so daß kein Teil des zweiten Elektrodenendteils und Isolators über die äußere Oberfläche des Bodenteils des zweiten Behälterteils hinausragt.

2. Eine Zelle nach Anspruch 1, worin die Wand (10a, 22a) des zweiten Behälterteils (5c, 17c) anliegend und konzentrisch in die Wand (11a, 23a) des ersten Behälterteils (2c, 14c) paßt.

3. Eine Zelle nach Anspruch 1, in der die Wand (11a, 23a) des ersten Behälterteils (2c, 14c) eng anliegend und konzentrisch in die Wand (10a, 22a) des zweiten Behälterteils (5c, 17c) paßt.

4. Eine Zelle nach den Ansprüchen 2 oder 3, in der die äußere Umfangskante der äußersten Wand (10a, 11a) hermetisch an der inneren Wand durch eine Schweißstelle (12) abgedichtet ist.

5. Eine Zelle nach den Ansprüchen 2 oder 3, in der die äußere Umfangskante der äußersten Wand (10a, 11a) hermetisch an der inneren Wand durch eine Lagerschweißung (12) abgedichtet ist.

6. Eine Zelle nach einem oder mehreren der Ansprüche 1 bis 5, in der der ringförmige Isolator ein Glasisolator (6c) oder eine Keramikisolator (18c) ist.

7. Eine Zelle nach den Ansprüchen 4 oder 5, in der die äußere Umfangskante der äußersten Wand zur inneren Wand hin umgebogen ist.

8. Ein Verfahren zur Herstellung einer hermetisch verschlossenen elektrochemischen Zelle vom Knopftyp, enthaltend die Schritte:

(a) Herstellen eines tassenförmigen ersten Behälterteils (33) mit einem geschlossenen Bodenteil und einem aufrechten Wandteil;

(b) Herstellen eines tassenförmigen zweiten Behälterteils (32) mit einem geschlossenen Bodenteil und einem aufrechten Wandteil, wobei das besagte Bodenteil des zweiten Behälterteils eine darin gelegene Elektrolytfüllröhre (43) aufweist, die gegenüber diesem durch einen ringförmigen Isolator (43) isoliert ist, wobei der Isolator in dem besagten Bodenteil des zweiten Behälterteils so mit Vertiefungen versehen ist, daß kein Teil des besagten Isolators über die äußere Oberfläche des besagten Bodenteils des besagten zweiten Behälterteils hinausragt;

(c) Einsetzen einer ersten Elektrode (35) in das besagte zweite Behälterteil (32) in Kontakt mit dem besagten zweiten Behälterteil;

(d) Einsetzen eines ersten Separators (36) in Kontakt mit der besagten ersten Elektrode;

(e) Einsetzen einer zweiten Elektrode (37) von entgegengesetzter Polarität wie die erste Elektrode in Kontakt mit dem besagten ersten Separator, wobie die besagte zweite Elektrode von der besagten ersten Elektrode durch den besagten ersten Separator getrennt wird;

(f) Einsetzen eines zweiten Separators (38) in Kontakt mit der besagten zweiten Elektrode (37);

(g) Einsetzen einer dritten Elektrode (39) der gleichen Polarität wie die besagte erste Elektrode in Kontakt mit dem besagten zweiten Separator (38), wobie die dritte Elektrode von der besagten zweiten Elektrode durch den besagten zweiten Separator getrennt wird;

(h) Einpassen der Wand des besagten zweiten Behälterteils (32) eng anliegend und konzentrisch innerhalb der Wand des besagten ersten Behälterteils (33), so daß das besagte Bodenteil des besagten ersten Behälterteils (33) sich in Kontakt mit der besagten dritten Elektrode befindet, und das besagte Füllrohr (43) in Kontakt mit der besagten zweiten Elektrode (37) ist;

(i) hermetisches Verschließen der äußeren Umfangskante (41) des besagten Behälterteils (32) an der besagten Wand des besagten zweiten Behälterteils (33);

(j) Evakuieren des Zellinneren;

(k) Füllen der Zelle mit einem Elektrolyten durch das besagte Füllrohr;

(l) Abklemmen (44) des besagten Füllrohrs, um es zu verschließen;

(m) Verschweißen (46) des besagten Füllrohrs in dem Klemmgebiet; und

(n) Entfernen der überschüssigen Länge (45) des besagten Füllrohres oberhalb der Schweißstelle (46), wobei die besagten ersten und zweiten Behälterteile das Zellgehäuse bilden, das als ein erstes Elektrodenendstück dient, das verschweißte Füllrohr als zweites Elektrodenendstück dient, wobei das besagte zweite Elektrodenendstück im besagten Bodenteil des besagten zweiten Behälterteils so vertieft ist, daß kein Teil des besagten zweiten Elektrodenendstücks über die äußere Oberfläche des besagten Bodenteils des besagten zweiten Behälterteils hinausragt.

FIG. IA

FIG. IB

FIG. IC

FIG. ID

**0 017 436**

FIG. 2A

FIG. 2B

FIG. 2C

FIG. 2D

FIG. 3A

FIG. 3B

FIG. 3C